(19) Europäisches Patentamt
European Patent Office
Office européen des brevets

(11) **EP 2 034 597 A1**

(12) **EUROPEAN PATENT APPLICATION**
published in accordance with Art. 153(4) EPC

(43) Date of publication:
**11.03.2009 Bulletin 2009/11**

(51) Int Cl.:
**H02M 3/28** *(2006.01)*      **H05B 6/04** *(2006.01)*

(21) Application number: **07742211.1**

(22) Date of filing: **24.04.2007**

(86) International application number:
**PCT/JP2007/058776**

(87) International publication number:
**WO 2007/148473 (27.12.2007 Gazette 2007/52)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.06.2006 JP 2006171559**

(71) Applicant: **Panasonic Electric Works Co., Ltd
Kadoma-shi
Osaka 571-8686 (JP)**

(72) Inventor: **KITAMURA, Hiroyasu
c/o Panasonic Electric Works Co., Ltd.
Kadoma-shi, Osaka (JP)**

(74) Representative: **Müller-Boré & Partner
Patentanwälte
Grafinger Strasse 2
81671 München (DE)**

(54) **SELF-EXCITED OSCILLATION CIRCUIT**

(57)      A self-excited oscillation circuit of the invention includes a turn-OFF transistor Tr1 that turns OFF a transistor Q1, a turn-OFF capacitor C3 that outputs a voltage Vb to the base of the turn-OFF transistor Tr1, and a bias resistance R1 that charges the turn-OFF capacitor C3 with a voltage in magnitude corresponding to a drain current Id that flows when the transistor Q1 turns ON. A resistance R3 is connected between the turn-OFF capacitor C3 and a power supply portion 50. Accordingly, charges are accumulated in the turn-OFF capacitor C3 so that the voltage Vb will not drop to or below a bias voltage. It thus becomes possible to make the bias resistance R1 smaller, which can in turn reduce an energy loss at the bias resistance R1.

FIG. 2

**Description**

Technical Field

The present invention relates to a self-excited oscillation circuit.

Background Art

FIG. 10 is a circuit diagram showing a conventional power supply device described in Patent Document 1. Referring to FIG. 10, when a power supply portion 300 is connected to terminals 3a and 3b, power is supplied to a capacitor C200 via a bias resistance R100. Accordingly, the capacitor C200 is charged and a bias voltage V100 rises. When a gate-source voltage V200 exceeds a threshold voltage of a field effect transistor Q100 due to the bias voltage V100, the field effect transistor Q100 turns ON. This allows a drain current I100 to flow and causes a drain voltage V300 to drop. A potential difference is thus generated across a coil L100. In association with the generation of the potential difference, a voltage is induced across a coil L300 and a gate voltage V400 rises further.

Meanwhile, a voltage between bias resistances R310 and R320 that turns ON and OFF the transistor Q200 in response to the magnitude of the drain current I100 rises and a base current is supplied to a transistor Q200. The transistor Q200 thus turns ON. Accordingly, the gate voltage V400 of the field effect transistor Q100 drops and the field effect transistor Q100 turns OFF.

A time needed for the field effect transistor Q100 to turn ON at the time of power activation is thus shortened markedly and accumulation energy due to the drain current I100 is suppressed to an adequate amount. It is therefore possible to reduce a flyback voltage that is generated after the field effect transistor Q100 turns OFF.

With the conventional power supply device, however, when it adopts a power supply portion 300 that supplies low power, for example, 10 W or below, it is necessary to extend an ON time of the field effect transistor Q100 in order to output power almost as high as the power outputted when it adopts a power supply portion 300 that supplies high power to a load 400. Hence, an energy loss at the bias resistances R310 and R320 due to the drain current I100 flowing therein undesirably increases in the conventional power supply device. Patent Document 1: Japanese unexamined Patent Publications No.H6-70461

Disclosure of the Invention

An object of the invention is to provide a self-excited oscillation circuit capable of reducing an energy loss at the bias resistance.

A self-excited oscillation circuit of the invention includes: a turn-OFF transistor that turns OFF a switching element connected to a resonance circuit in series; a turn-OFF capacitor that outputs a control voltage to a control terminal of the turn-OFF transistor; a bias resistance that charges the turn-OFF capacitor with a voltage in magnitude corresponding to an ON current flowing when the switching element turns ON; and a charging portion that charges the turn-OFF capacitor in such a manner that the control voltage will not drop to or below a specific bias voltage that is lower than a threshold voltage of the turn-OFF transistor.

According to the self-excited oscillation circuit configured as above, the turn-OFF capacitor is charged with charges from a state where a specific amount of charges are accumulated therein, and the turn-OFF transistor is turned ON by the turn-OFF capacitor. Accordingly, even when the resistance value of the bias resistance is small, a time needed to turn ON the turn-OFF transistor can be maintained at a constant value. It thus becomes possible to reduce an energy loss at the bias resistance.

Brief Description of the Drawings

FIG. 1 is a view showing an overall configuration of a feed system to which a self-excited oscillation circuit according to a first embodiment of the invention is applied.
FIG. 2 shows a circuit diagram of the self-excited oscillation circuit shown in FIG. 1.
FIG. 3 shows a timing chart of the self-excited oscillation circuit of FIG. 2: FIG. 3(a) showing a source-drain voltage of a transistor; FIG. 3(b) showing a drain current of the transistor; FIG. 3(c) showing a base-emitter voltage of a turn-OFF transistor; FIG. 3(d) showing ON and OFF timing of the transistor; and FIG. 3(e) showing ON and OFF timing of the turn-OFF transistor.
FIG. 4 shows a major portion of a self-excited oscillation circuit 1 in a case where a turn-OFF capacitor C3 is not connected to a power supply portion 50 via a resistance R3.

FIG. 5 shows a major portion of the self-excited oscillation circuit 1 in which the turn-OFF capacitor C3 is connected to the power supply portion 50 via the resistance R3.

FIG. 6 is a view showing an overall configuration of a shaver system in a case where a self-excited oscillation circuit 1a of a second embodiment is applied to a shaver cleaner 200.

FIG. 7 is a circuit diagram of the self-excited oscillation circuit.

FIG. 8 shows a circuit diagram of a self-excited oscillation circuit according to a third embodiment.

FIG. 9 shows a circuit diagram of a self-excited oscillation circuit according to a fourth embodiment.

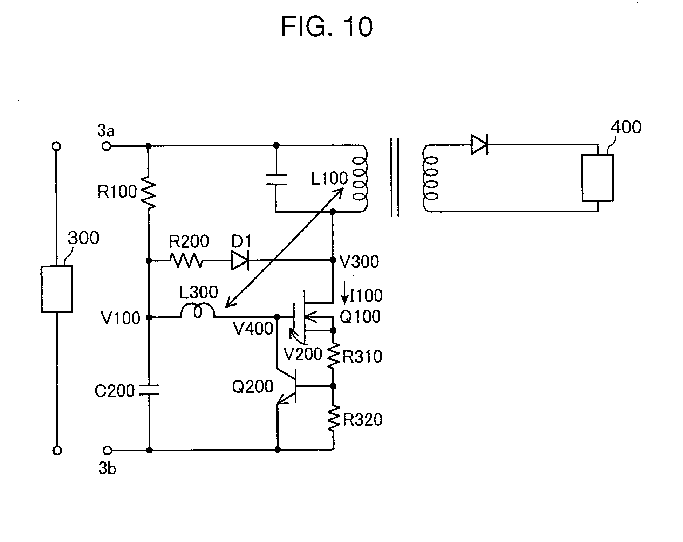

FIG. 10 is a circuit diagram showing a conventional power supply device described in Patent Document 1.

Best Mode for Carrying Out the Invention

Hereinafter, one embodiment of the invention will be described with reference to the drawings. Components labeled with the same reference numerals are the same in all the drawings and descriptions of such components are omitted herein.

First Embodiment

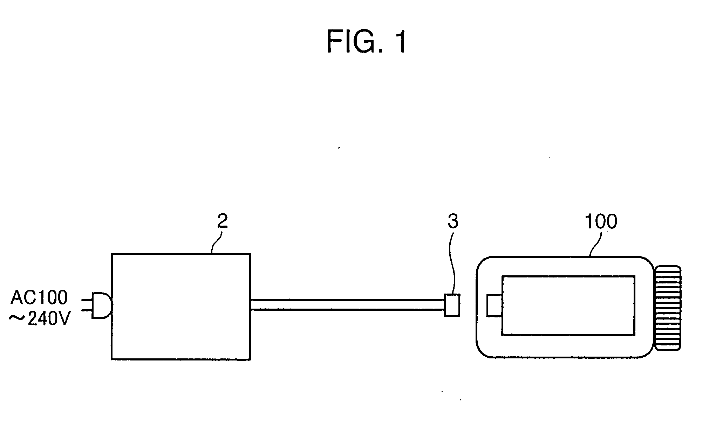

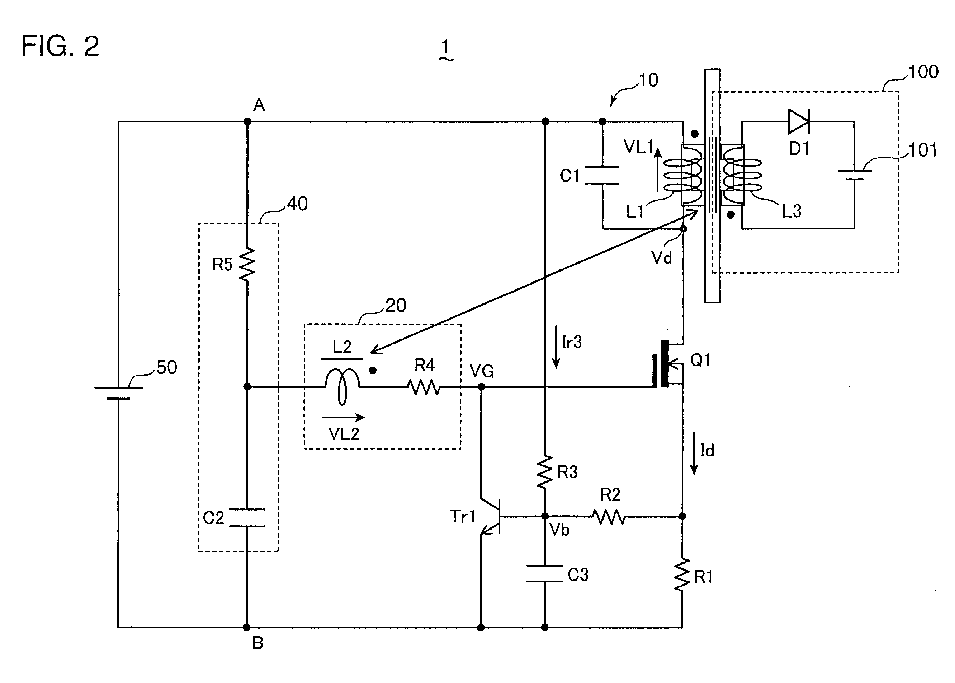

FIG. 1 is a view showing the overall configuration of a feed system to which a self-excited oscillation circuit according to a first embodiment of the invention is applied. FIG. 2 is a circuit diagram of the self-excited oscillation circuit shown in FIG. 1.

Referring to FIG. 1, the feed system includes an electrical power supply portion 2 and a connector 3. As is shown in FIG. 2, the electricity supply portion 2 is formed, for example, by including a feedback portion 20, a resistance R3, a turn-OFF capacitor C3, a bias portion 40, a transistor Q1, a bias resistance R1, a base resistance R2, a turn-OFF transistor Tr1, and a power supply portion 50. The electrical power supply portion 2 converts an AC voltage, for example, of 100 V to 240 V supplied from a household commercial power supply to a DC voltage, for example, of 5 V (for instance, power of 6 W and a current of 1.2 A) to generate high-frequency power, and supplies this power to a load device 100 via the connector 3. As the load device 100, for example, an electric razor (shaver) is adopted, and it is charged with power supplied from the electrical power supply portion 2. The connector 3 is formed by including a resonance circuit 10 shown in FIG. 1.

The feed system includes the self-excited oscillation circuit 1, the power supply portion 50, and the load device 100. The self-excited oscillation circuit 1 is a non-contact charging circuit that charges the load device 100 in a non-contact manner. The self-excited oscillation circuit 1 includes the resonance circuit 10, the feedback portion 20, the resistance R3, the turn-OFF capacitor C3, the bias portion 40, the transistor Q1, the bias resistance R1, the base resistance R2, and the turn-OFF transistor Tr1.

The resonance circuit 10 is formed by including a resonance capacitor C1 and a resonance coil L1 connected in parallel and supplies power to the load device 100 that is magnetically coupled to the resonance circuit 10.

The feedback portion 20 is formed by including a feedback coil L2 and a resistance R4. The feedback coil L2 is magnetically coupled to the resonance coil L1, so that power generated at the resonance coil L1 is positively fed back to the feedback coil L2 for this power to be outputted to the gate of the transistor (switching element) Q1 via the resistance R4.

The turn-OFF capacitor C3 is connected in parallel between the base and the emitter of the turn-OFF transistor Tr1. The turn-OFF capacitor C3 is charged with a voltage outputted from the power supply portion 50 via the resistance R3 and also with a voltage corresponding to a drain current (ON current) Id of the transistor Q1 from the bias resistance R1, and outputs a voltage (control voltage) Vb to the base (control terminal) of the turn-OFF transistor Tr1.

The resistance R3 is connected between a power supply terminal A connected to the positive terminal of the power supply portion 50 and the base of the turn-OFF transistor Tr1. The resistance R3 outputs a voltage outputted from the power supply portion 50 to the turn-OFF capacitor C3 and constantly charges the turn-OFF capacitor C3 so that the voltage Vb will not drop to or below a pre-set specific bias voltage, which is as high as or lower than the threshold voltage of the turn-OFF transistor Tr1.

The transistor Q1 is formed of an n-channel electric field effect transistor, a drain of which is connected to the resonance circuit 10 and a source of which is connected to the bias resistance R1.

The bias resistance R1 is connected to the base of the turn-OFF transistor Tr1 at one end via the base resistance R2 and connected to a power supply terminal B connected to the negative terminal of the power supply portion 50 at the other end.

Regarding the turn-OFF transistor Tr1, the collector is connected to the gate of the transistor Q1 and the emitter is connected to the power supply terminal B. When the drain current Id reaches specific magnitude and the voltage Vb exceeds the specific threshold voltage (for example, 0.6 V), the turn-OFF transistor Tr1 turns ON to release the gate capacity of the transistor Q1, which causes the transistor Q1 to turn OFF. Accordingly, the drain current Id is limited to constant magnitude or below.

The bias portion 40 is formed by including a resistance (start-up resistance) R5 and a capacitor (start-up capacitor) C2. The resistance R5 and the capacitor C2 are connected in series. The bias portion 40 generates a bias voltage to turn ON the transistor Q1 according to the voltage outputted from the power supply portion 50, and outputs the bias voltage to the gate of the transistor Q1 via the feedback portion 20. The resistance R5 is connected between the power supply terminal A and the feedback coil L2. The capacitor C2 is connected between the power supply terminal B and the feedback coil L2. In short, the feedback portion 20 is connected to the connection point of the resistance R5 and the capacitor C2 that are connected in series. The power supply terminal A is connected to the positive terminal of the power supply portion 50 and the power supply terminal B is connected to the negative terminal of the power supply portion 50.

The load device 100 includes, for example, a coil L3, a diode D1, and a rechargeable battery 101. The coil L3 is magnetically coupled to the resonance coil L1 in reversed phase, so that it generates a voltage with a phase difference of 180 degrees from the voltage VL1 at the resonance coil L1. The diode D1 rectifies the voltage generated at the coil L3. The rechargeable battery 101 is charged by the voltage rectified by the diode D1.

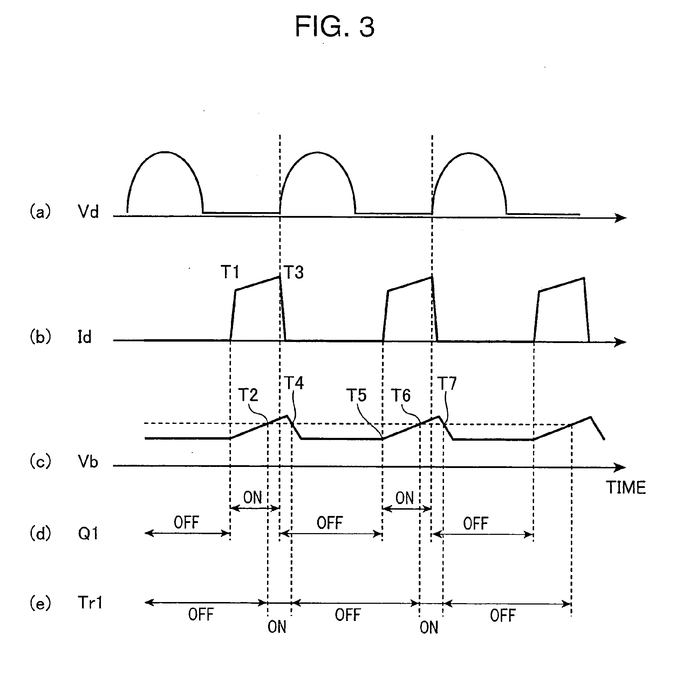

An operation of the self-excited oscillation circuit 1 shown in FIG. 2 will now be described. FIG. 3 shows a timing chart of the self-excited oscillation circuit of FIG. 2. FIG. 3(a) shows a source-drain voltage of the transistor. FIG. 3(b) shows a drain current of the transistor. FIG. 3(c) shows a base-emitter voltage of the turn-OFF transistor. FIG. 3 (d) shows ON and OFF timing of the transistor. FIG. 3(e) shows ON and OFF timing of the turn-OFF transistor.

When the power supply portion 50 outputs a specific DC voltage (for example, 5V), the capacitor C2 is charged and the voltage VG at the gate of the transistor Q1 rises. When the voltage VG at the gate reaches the threshold voltage of the transistor Q1, the transistor Q1 turns ON (time T1) and the drain current Id starts to flow. The resonance capacitor C1 and the turn-OFF capacitor C3 are thus charged.

When the turn-OFF capacitor C3 is charged and the voltage Vb exceeds the threshold voltage of the turn-OFF transistor Tr1, the turn-OFF transistor Tr1 turns ON (time T2) and the gate capacity of the transistor Q1 is discharged. This discharge causes the voltage VG to drop and the transistor Q1 turns OFF (time T3) when the voltage VG drops to or below the threshold voltage of the transistor Q1.

When the transistor Q1 turns OFF (time T3), the drain current Id drops abruptly and the drain current Id drops to 0. When the drain current Id drops to 0, the turn-OFF capacitor C3 is discharged, which causes the voltage Vb to drop. When the voltage Vb drops to or below the threshold voltage of the turn-OFF transistor Tr1, the turn-OFF transistor Tr1 turns OFF (time T4).

When the turn-OFF transistor Tr1 turns OFF, the turn-OFF capacitor C3 starts to discharge and the voltage Vb keeps dropping. It should be noted that because the turn-OFF capacitor C3 is connected to the power supply portion 50 via the resistance R3 and a current Ir3 is supplied to the turn-OFF capacitor C3 from the power supply portion 50, when the voltage Vb drops to a pre-set specific value, the turn-OFF capacitor C3 stops discharging so as to maintain the voltage Vb at the bias voltage. Herein, the values of the resistances R3, R2 and R1 and the turn-OFF capacitor C3 are set so that the bias voltage is maintained at a specific value lower than the threshold voltage of the turn-OFF transistor Tr1 (for example, values of 0.1, 0.2, 0.3, 0.4 and so forth of the threshold voltage of the turn-OFF transistor Tr1). Time constants of the resistance R5 and the capacitor C2 are set larger than time constants of the resistance R3 and the turn-OFF capacitor C3. Accordingly, the rate at which the voltage Vb reaches the threshold voltage of the turn-OFF transistor Tr1 by charging the turn-OFF capacitor C3 via the resistance R3 is set higher than the rate at which the transistor Q1 turns ON. Accordingly, the turn-OFF transistor Tr1 becomes able to turn OFF the transistor Q1 in a reliable manner.

Meanwhile, when the transistor Q1 turns OFF, the resonance circuit 10 starts to resonate. The voltage Vd then starts to change by drawing an upward convex almost sine curve in association with a change of the voltage VL1 at the resonance coil L1. It should be noted that the feedback coil L2 is magnetically coupled to the resonance coil L1 in identical phase. The voltage VL2 generated at the feedback coil L2 therefore changes by drawing a downward convex almost sine curve. In association with this change, the voltage VG changes and the transistor Q1 turns ON when the voltage VG exceeds the threshold voltage of the transistor Q1 (time T5).

When the transistor Q1 turns ON, the drain current Id starts to flow. The turn-OFF capacitor C3 is thus charged, and the turn-OFF capacitor C3 turns ON again when the voltage Vb exceeds the threshold voltage of the turn-OFF transistor Tr1 (time T6) whereas the transistor Q1 turns OFF again (time T7). In the self-excited oscillation circuit 1, power is supplied to the load device 100 while the operations as described above are repeated.

A configuration in which the turn-OFF capacitor C3 is not connected to the power supply portion 50 via the resistance R3 will now be discussed. According to this configuration, because power is not supplied to the turn-OFF capacitor C3 from the power supply portion 50, all the accumulated charges are discharged and the discharge continues until the voltage Vb drops to 0. Hence, in order to turn ON the turn-OFF transistor Tr1, charging of the turn-OFF capacitor C3 has to be started from a state where there are no charges therein. Accordingly, the value of the bias resistance R1 has to be increased in order to raise the voltage Vb to the threshold voltage of the turn-OFF transistor Tr1 within a constant time. This consequently increases an energy loss at the bias resistance R1 due to the drain current Id that flows while the transistor Q1 is ON.

On the contrary, in the self-excited oscillation circuit 1, the turn-OFF capacitor C3 is connected to the power supply portion 50 via the resistance R3. The turn-OFF capacitor C3 thus maintains the value of the voltage Vb at a constant value (bias voltage) while the transistor Q1 is OFF. Hence, charging starts in a state where a pre-set specific amount of charges are accumulated in the turn-OFF capacitor C3, and the turn-Off capacitor C3 becomes able to turn ON the turn-OFF transistor Tr1 when it is charged with the charges sufficient for the voltage Vb to reach the threshold voltage of the turn-OFF transistor Tr1. To be more concrete, given that a voltage to be outputted from the power supply portion 50 is 5 V, the resistance R3 is 16 k$\Omega$, the base resistance R2 is 1 k$\Omega$, and the bias resistance R1 is negligible, a bias voltage of about 0.29 V is constantly applied to the base of the turn-OFF transistor Tr1. Accordingly, in order to turn ON the turn-OFF transistor Tr1, it is sufficient to charge the turn-OFF capacitor C3 more with charges comparable to about 0.3 V.

It therefore becomes possible to turn ON the turn-OFF transistor Tr1 within a constant time even when the value of the bias resistance R1 is made smaller. It thus becomes possible to reduce an energy loss at the bias resistance R1 due to the drain current Id that flows while the transistor Q1 is ON.

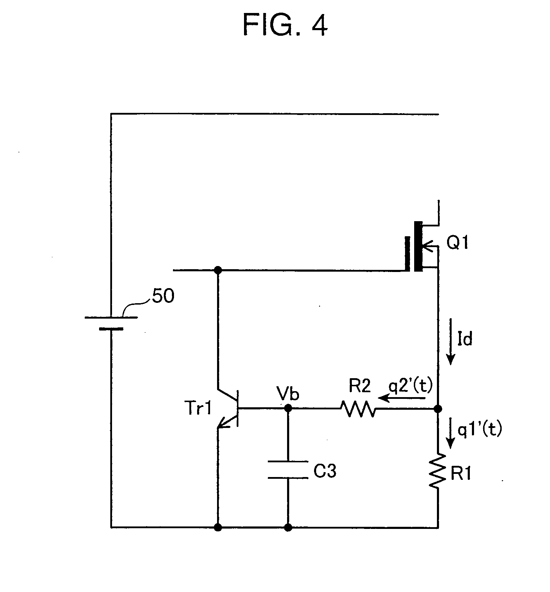

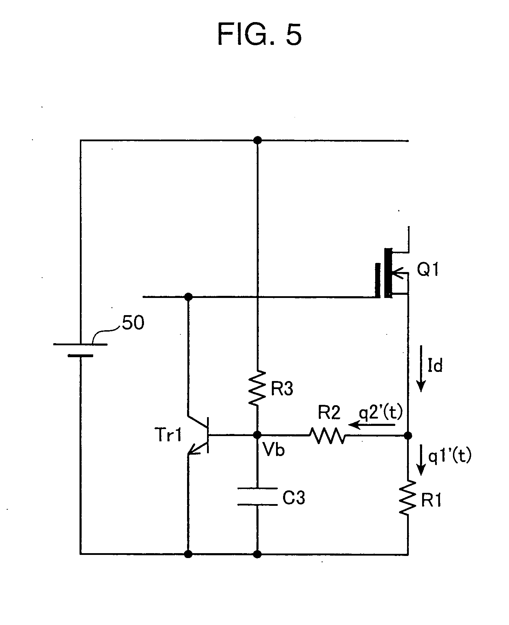

A function of the self-excited oscillation circuit 1 achieved by the connection of the resistance R3 will now be described more in detail. FIG. 4 shows a major portion of the self-excited oscillation circuit 1 in a case where the turn-OFF capacitor C3 is not connected to the power supply portion 50 via the resistance R3. FIG. 5 shows a major portion of the self-excited oscillation circuit 1 in which the turn-OFF capacitor C3 is connected to the power supply portion 50 via the resistance R3. It should be noted that circuit components that are not shown in FIG. 4 and FIG. 5 are the same as those in FIG. 2.

Regarding the circuit shown in FIG. 4, given that the drain Id is constant for ease of description, I1 (=q1'(t)) is a current flowing into the bias resistance R1, I2 (=q2'(t)) is a current flowing into the base resistance R2, C is an electrostatic capacitance of the turn-OFF capacitor C3, R1 is a resistance value of the bias resistance R1, and R2 is a resistance value of the base resistance R2, then a circuit equation as below is obtained. In the equation, q1'(t) is a derivative of the charge q1(t), q2'(t) is a derivative of the charge q2, and t is a time.

$$Id = q1'(t) + q2'(t)$$

$$q1'(t) \times R1 = q2'(t) \times R2 + q2(t)/C$$

$$q1(0) = R2 \times Id/(R1 + R2)$$

$$q2(0) = 0$$

By solving the equation above, the voltage Vc1(t) of the turn-OFF capacitor C3 is expressed by an equation as follows.
$$Vc1(t) = exp(-t/C(R1 + R2)) \times (-1 + exp(t/C(R1 + R2)))$$
$$\times Id \times R1$$

By finding a time needed for the voltage Vc1(t) to reach the threshold voltage of the turn-OFF transistor Tr1 in accordance with the equation above, an ON time t1 since the transistor Q1 turns ON and the drain current Id starts to flow until the turn-OFF transistor Tr1 turns ON is determined.

For the circuit shown in FIG. 5, too, the value of the voltage Vb in the initial state where the transistor Q1 turns ON and the drain current Id starts to flow, that is, the value of the bias voltage, is found to be VB in the same manner as above, and a circuit equation as follows is obtained.

$$Id = q1'(t) + q2'(t)$$

$$q1'(t) \times R1 = q2'(t) \times R2 + q2(t)/C$$

$$q1(0) = R2 \times Id/(R1 + R2)$$

$$q2(0) = VB$$

By solving the equation above, the voltage Vc2(t) of the turn-OFF capacitor C3 is expressed by an equation as follows.
$$Vc2(t) = exp(-t/C(R1 + R2)) \times (C·VB - C·Id·R1 + C·exp(t/C(R1 + R2)) \times Id \times R1)/C$$

R1 can be found by substituting the ON time t1 found earlier into the equation above. Herein, because it is difficult to obtain an analytic solution of R1 from Vc2(t), Vc1(t) = 0.6 V, R1 = 1 $\Omega$, R2 = 1 k$\Omega$, C = 4700 pF, and Id = 5A are substituted into the equation of Vc1(t). The ON time t1 is thus found to be t1 = $6.0 \times 10^{-7}$. Then, by substituting the ON time t1 thus found into the equation of Vc2(t) and by substituting Vc2(t) = 0.6 V, R2 = 1 k$\Omega$, C = 4700 pF, Id = 5A, and VB = 0.3 V into the equation of Vc2(t), R1 is found to be R1 = 0.56 $\Omega$ from the equation of Vc2(t).

More specifically, with the circuit shown in FIG. 5, it is possible to set the resistance value of the bias resistance R1 to 0.56 $\Omega$. Hence, in comparison with the energy loss with the circuit shown in FIG. 4, an energy loss at the bias resistance R1 can be reduced by a factor of 0.56. According to the calculation, it is possible to make the resistance value of the bias resistance R1 smaller as the values of VB and Id become larger with the circuit shown in FIG. 5.

As has been described, according to the self-excited oscillation circuit 1 of the first embodiment, because the turn-OFF capacitor C3 is connected to the power supply portion 50 via the resistance R3, the turn-OFF capacitor C3 maintains the voltage Vb at a constant bias voltage even in a period during which the transistor Q1 stays OFF. Accordingly, even when the resistance value of the bias resistance R1 is made smaller, the ON time t1 can be maintained at a constant value, which makes it possible to reduce an energy loss at the bias resistance R1.

Because the turn-OFF capacitor C3 is connected to the power supply portion 50 via the resistance R3, a current flows into the resistances R3, R1, and R2 even in the OFF period of transistor Q1. Herein, the resistance values of the resistances R3, R1, and R2 are set so that the current Ir3 flowing into the resistance R3 takes a value significantly smaller than the value of the drain current Id. Hence, an energy loss at the bias resistance R1 in the OFF period of the transistor Q1 can be negligibly small in comparison with an energy loss at the bias resistance R1 during the ON period of the transistor Q1.

Second Embodiment

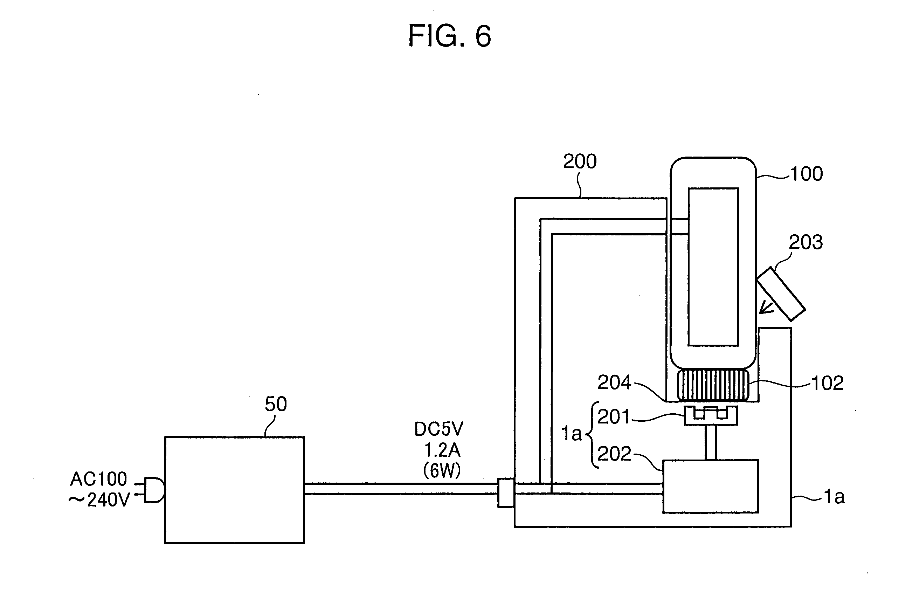

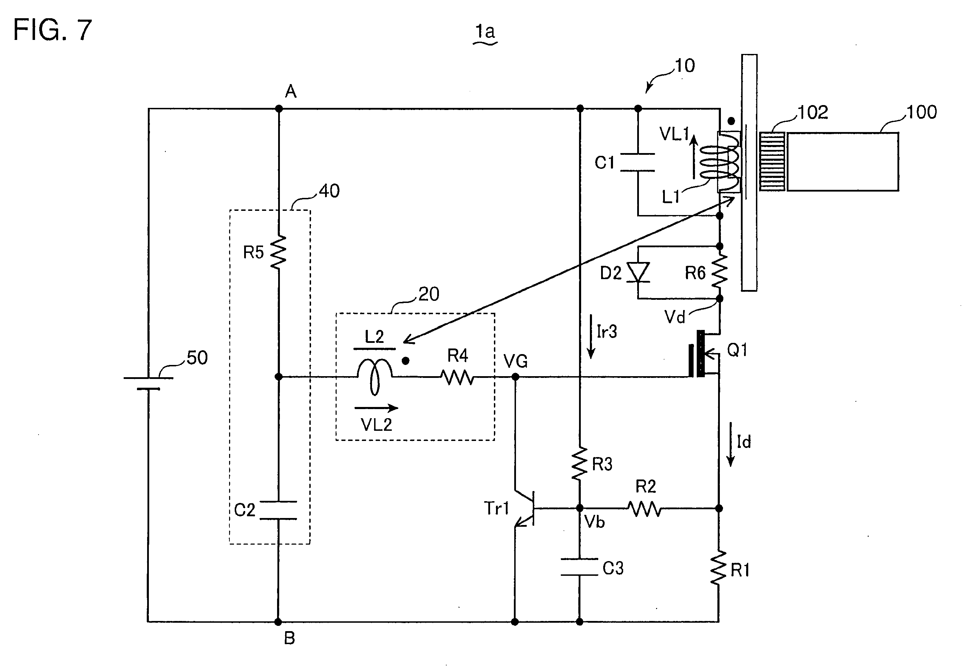

A self-excited oscillation circuit according to a second embodiment of the invention will now be described. FIG. 6 is a view showing the overall configuration of a shaver system in a case where a self-excited oscillation circuit 1a of the second embodiment is applied to a shaver cleaner 200. FIG. 7 shows a circuit diagram of the self-excited oscillation circuit 1a. The shaver system is formed by including the power supply portion 50, the shaver cleaner 200, and the load device 100. In the second embodiment, like components are labeled with like reference numerals with respect to the first embodiment above and descriptions of such components are omitted herein.

The shaver cleaner 200 shown in FIG. 6 is formed by including an induction heating transformer 201, an induction heating circuit 202, and a fan 203. The induction heating transformer 201 is formed, for example, of a resonance circuit 10 shown in FIG. 7, and it supplies power to a blade edge 102 of the shaver forming the load device 100 and heats the blade edge 102 by flowing an eddy current to the blade edge 102. The induction heating circuit 202 includes the feedback portion 20, the resistance R3, the turn-OFF capacitor C3, the bias portion 40, the transistor Q1, the bias transistor R1, the base transistor R2, the turn-OFF transistor Tr1, the diode D2, and the resistance R6 shown in FIG. 7. The induction heating transformer 201 and the induction heating circuit 202 together form the self-excited oscillation circuit 1a.

The fan 203 is driven to dry the blade edge 102 and it accelerates drying of the blade edge 102 by providing a current of air to the blade edge 102.

The shaver as the load device 100 is, for example, placed in a shaver mount portion 204 of the shaver cleaner 200 after used by the user. Then, a cleaning solution is supplied to the blade edge 102 from an unillustrated cleaning mechanism and the blade edge 102 is cleaned. When the cleaning with the cleaning solution ends, power is supplied to the blade edge 102 from the induction heating transformer 201. The blade edge 102 is thus dried not only by an eddy current generated at the blade edge 102 but also a current of air from the fan 203.

In contrast to the self-excited oscillation circuit 1 shown in FIG. 2, the self-excited oscillation circuit 1a shown in FIG. 7 is configured in such a manner that a diode D2 and a resistance R6 connected in parallel are further connected between the resonance circuit 10 and the drain of the transistor Q1. Even when the diode D2 and the resistance R6 are connected, the self-excited oscillation circuit 1a operates in the same manner as the self-excited oscillation circuit 1. It should be noted that because the diode D2 and the resistance R6 are connected, it is possible to prevent an event that a current flows into the body diode of the transistor Q1 and energy accumulated in the resonance circuit 10 is regenerated to the power supply portion 50 in a period since the transistor Q1 turns OFF and the resonance circuit 10 starts to resonate until the transistor Q1 turns ON again. In particular, this regeneration increases in a case where the power supply portion 50 is provided with an electrolytic capacitor connected between the power supply terminals A and B. When energy is regenerated to the power supply portion 50, the oscillation frequency of the self-excited oscillation circuit 1a drops and the induction heating capability becomes poor.

In a case where the maximum value of the output power of the power supply portion 50 is about 6 W, the fan 203 consumes power, for example, of 1 W, and the blade edge 102 has to be dried with the remaining power of 5 W. Given that a voltage outputted from the power supply portion 50 is 5 V (a current is 1.2A), then because the blade edge 102 is as thin as several tens of micrometers and there is a large gap from the induction heating transformer 201, the number of linkages of the flux generated at the induction heating transformer 201 with the blade edge 102 is reduced. In order to increase the number of linkages with the flux, the drain current Id has to be increased, which, however, increases a loss at the bias resistance R1 as large as 3 to 4 W in some cases. It consequently becomes impossible to heat the blade edge 102.

To overcome such an inconvenience, as is shown in FIG. 7, the self-excited oscillation circuit 1a is configured in such a manner that the turn-OFF capacitor C3 and the power supply portion 50 are connected via the resistance R3, which makes it possible to make the resistance value of the bias resistance R1 smaller. An energy loss at the bias resistance R1 can be thus reduced and the blade edge 102 can be dried efficiently.

In addition, with the self-excited oscillation circuit 1a, a voltage from the power supply portion 50 formed of an AC adapter having a small input fluctuation of about 2 to 3% with respect to 5 V is directly applied. A voltage applied to the base of the turn-OFF transistor Tr1 is therefore stabilized and a variance of the ON time of the transistor Q1 can be lessened.

As has been described, according to the self-excited oscillation circuit 1a of the second embodiment, because the turn-OFF capacitor C3 and the power supply portion 50 are connected via the resistance R3, the resistance value of the bias resistance R1 can be smaller. An energy loss at the bias resistance R1 can be thus reduced and the blade edge 102 can be dried efficiently. In addition, because the resistance R6 and the diode D2 are connected, regeneration of energy from the resonance circuit 10 to the power supply portion 50 can be prevented. It thus becomes possible to prevent the oscillation frequency of the self-excited oscillation circuit 1a from dropping and hence the induction heating capability from becoming poor.

Third Embodiment

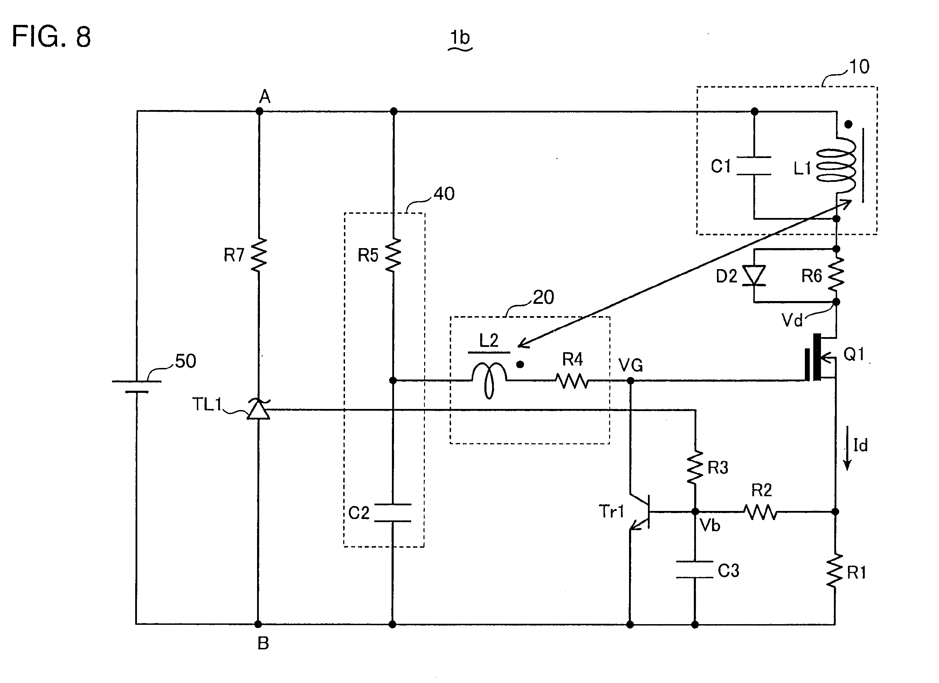

A self-excited oscillation circuit 1b according to a third embodiment of the invention will now be described. FIG. 8 is a circuit diagram of the self-excited oscillation circuit 1b of the third embodiment. Like components of the third embodiment are labeled with like reference numerals with respect to the first and second embodiments above and descriptions of such components are omitted herein.

The self-excited oscillation circuit 1b is characterized in that the resistance R3 is connected between a shunt regulator TL1 and the turn-OFF capacitor C3.

The shunt regulator TL1 is configured in such a manner that the cathode is connected to the power supply terminal A via a resistance R7, the anode is connected to the power supply terminal B, and the reference terminal is connected to the turn-OFF capacitor C3 via the resistance R3. The shunt regulator TL1, the resistance R7, and the resistance R3 together form the charging portion. For example, TL431 available from Toshiba Corporation can be adopted as the shut regulator TL1. According to this configuration, a reference voltage of the shunt regulator TL1 is applied to the turn-OFF capacitor C3 via the resistance R3. It thus becomes possible to suppress a variance of the voltage Vb caused by a variance of the input voltage of the power supply portion 50 to the minimum, which can stabilize the ON time of the transistor Q1. The self-excited oscillation circuit 1b consequently becomes able to supply stable power to the load device 100.

As has been described, according to the self-excited oscillation circuit 1b of the third embodiment, because the shunt regulator TL1 is provided, in addition to the function and effect same as those achieved in the first and second embodiment above, stable power can be supplied to the load device 100.

Fourth Embodiment

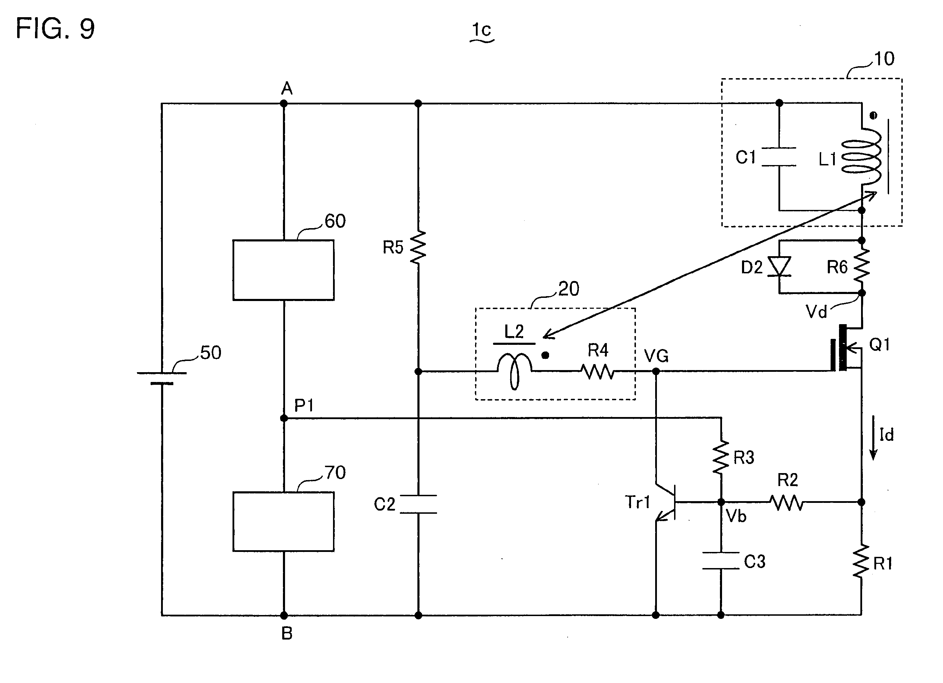

A self-excited oscillation circuit 1c according to a fourth embodiment of the invention will now be described. FIG. 9 is a circuit diagram of the self-excited oscillation circuit 1c of the fourth embodiment. Like components of the fourth embodiment are labeled with like reference numerals with respect to the first through third embodiments above and descriptions of such components are omitted herein.

The self-excited oscillation circuit 1c is characterized in that the resistance R3 is connected between the connection point P1 of a DC-to-DC converter 60 and a microcomputer 70, and the turn-OFF capacitor C3. The DC-to-CD converter 60 steps down a voltage (for example, 5 V) outputted from the power supply portion 50 to a drive voltage (for example, 3 V) of the microcomputer 70. The DC-to-DC converter 60, the microcomputer 70, and the resistance R3 together form the charging portion.

The microcomputer 70 receives a voltage stepped down by the DC-to-DC converter 60 as the drive voltage and generates a reference voltage, which is outputted to the resistance R3. Because the microcomputer 70 includes a voltage generation circuit capable of generating a stable reference voltage, the microcomputer 70 can generate a stable reference voltage with a minor voltage fluctuation. Accordingly, because the reference voltage from the microcomputer 70 is applied to the turn-OFF capacitor C3 via the resistance R3, a variance of the voltage Vb caused by a variance of the input voltage from the power supply portion 50 can be suppressed to the minimum. The ON time of the transistor Q1 is thus stabilized, which consequently makes it possible to supply stable power to the load device 100.

As has been described, according to the self-excited oscillation circuit 1c of the fourth embodiment, because the reference voltage of the microcomputer 70 is outputted to the turn-OFF capacitor C3 via the resistance R3, in addition to the function and effect same as those achieved in the first through third embodiment above, stable power can be supplied to the load device 100.

While the present description has disclosed various inventions as described above, the chief inventions will be summarized as follows.

A self-excited oscillation circuit according to a first aspect includes: a resonance circuit that includes a resonance capacitor and a resonance coil and outputs power to a load device; a switching element connected to the resonance circuit in series; a feedback coil that positively feeds back a voltage generated at the resonance coil so as to output the voltage to a control terminal of the switching element; a turn-OFF transistor that turns OFF the switching element; a turn-OFF capacitor that outputs a control voltage to a control terminal of the turn-OFF transistor; a bias resistance that charges the turn-OFF capacitor with a voltage in magnitude corresponding to an ON current flowing when the switching element turns ON; and a charging portion that charges the turn-OFF capacitor in such a manner that the control voltage will not drop to or below a specific bias voltage that is lower than a threshold voltage of the turn-OFF transistor.

According to this configuration, the charging portion charges the turn-OFF capacitor in such a manner that the control voltage to be outputted to the control terminal of the turn-OFF transistor will not drop to or below a specific bias voltage lower than the threshold voltage of the turn-OFF transistor. Accordingly, when charges sufficient to reach the threshold voltage of the turn-OFF transistor are charged from a state where a specific amount of charges are accumulated, the turn-OFF capacitor becomes able to turn ON the turn-OFF transistor. Hence, even when the resistance value of the bias resistance is small, a time needed to turn ON the turn-OFF transistor can be maintained at a constant value. It thus becomes possible to reduce an energy loss at the bias resistance.

Also, a self-excited oscillation circuit according to a second aspect is the self-excited oscillation circuit according to the first aspect, which is configured in such manner that the charging portion includes a bias resistance that outputs a voltage outputted from a power supply portion that supplies the self-excited oscillation circuit with power to the turn-OFF capacitor.

According to this configuration, by a configuration as simple as connecting the resistance between the power supply portion and the turn-OFF capacitor, it is possible to charge the turn-OFF capacitor so that the control voltage will not drop to or below a constant bias voltage.

Also, a self-excited oscillation circuit according to a third aspect is the self-excited oscillation circuit according to the second aspect, which is configured in such a manner that the charging portion includes a voltage stabilizing portion that stabilizes the voltage outputted from the power supply portion and outputs the voltage that is now stable to the turn-OFF capacitor via the bias resistance.

According to this configuration, because a variance of an input voltage from the power supply portion can be suppressed to the minimum, a stable bias voltage can be outputted to the control terminal of the turn-OFF transistor. The oscillation circuit thus becomes able to supply stable power to the load device.

Also, a self-excited oscillation circuit according to a fourth aspect is the self-excited oscillation circuit according to the second or third aspect, which further includes a start-up resistance connected to a positive terminal of the power source portion and a start-up capacitor connected between a negative terminal of the power source portion and the start-up resistance, and is configured in such a manner that the control terminal of the switching element is connected to a connection point of the start-up resistance and the start-up capacitor via the feedback coil, and that time constants of the start-up capacitor and the start-up resistance are larger than time constants of the turn-OFF capacitor and the bias resistance.

According to this configuration, a rate at which the turn-OFF transistor turns ON is set higher than a rate at which the switching element turns ON. The turn-OFF transistor is therefore able to turn OFF the switching element in a reliable manner.

Also, a self-excited oscillation circuit according to a fifth aspect is the self-excited oscillation circuit according to any one of the first through fourth aspects, which is configured in such a manner that the power supply portion supplies power of 10 W or smaller.

According to this configuration, because an energy loss at the bias resistance is reduced, even when a power supply portion that supplies power of 10 W or lower is adopted for the self-excited oscillation circuit, it is still possible to supply stable power to the load device.

Also, a self-excited oscillation circuit according to a sixth aspect is the self-excited oscillation circuit according to any one of the first through fifth aspects, which is configured in such a manner that the resonance coil applies non-contact charging or induction heating to the load device.

According to this configuration, because an energy loss at the bias resistance is reduced, it is possible to provide a self-excited oscillation circuit capable of applying non-contact charging or induction heating suitably to the load device.

While the invention has been appropriately and fully described through the embodiments above with reference to the drawings in order to express the invention, it is to be understood that changes and/or modifications of these embodiments readily occur to anyone skilled in the art. Therefore, unless otherwise changed embodiments or modified embodiments implemented by anyone skilled in the art depart from the scope of the appended claims, such changed embodiments or modified embodiments should be construed as being included therein.

Industrial Applicability

According to the invention, it is possible to provide a self-excited oscillation circuit capable of reducing an energy loss at the bias resistance.

**Claims**

1. A self-excited oscillation circuit, **characterized by** comprising:

   a resonance circuit that includes a resonance capacitor and a resonance coil and outputs power to a load device;
   a switching element connected to the resonance circuit in series;
   a feedback coil that positively feeds back a voltage generated at the resonance coil so as to output the voltage to a control terminal of the switching element;
   a turn-OFF transistor that turns OFF the switching element;
   a turn-OFF capacitor that outputs a control voltage to a control terminal of the turn-OFF transistor;
   a bias resistance that charges the turn-OFF capacitor with a voltage in magnitude corresponding to an ON current flowing when the switching element turns ON; and
   a charging portion that charges the turn-OFF capacitor in such a manner that the control voltage will not drop to or below a specific bias voltage that is lower than a threshold voltage of the turn-OFF transistor.

2. The self-excited oscillation circuit according to claim 1, wherein:

the charging portion includes a bias resistance that outputs a voltage outputted from a power supply portion that supplies the self-excited oscillation circuit with power to the turn-OFF capacitor.

3. The self-excited oscillation circuit according to claim 2, wherein:

the charging portion includes a voltage stabilizing portion that stabilizes the voltage outputted from the power supply portion and outputs the voltage that is now stable to the turn-OFF capacitor via the bias resistance.

4. The self-excited oscillation circuit according to claim 2 or 3, further comprising:

a start-up resistance connected to a positive terminal of the power source portion; and
a start-up capacitor connected between a negative terminal of the power source portion and the start-up resistance,
wherein:
the control terminal of the switching element is connected to a connection point of the start-up resistance and the start-up capacitor via the feedback coil; and
time constants of the start-up capacitor and the start-up resistance are larger than time constants of the turn-OFF capacitor and the bias resistance.

5. The self-excited oscillation circuit according to any one of claims 1 through 4, wherein:

the power supply portion supplies power of 10 W or smaller.

6. The self-excited oscillation circuit according to any one of claims 1 through 5, wherein:

the resonance coil applies non-contact charging or induction heating to the load device.

# FIG. 1

AC100
~240V

2

3

100

FIG. 2

EP 2 034 597 A1

# FIG. 3

(a)  Vd

(b)  Id

    T1      T3

(c)  Vb

    T2    T4      T5   T6    T7

TIME

(d)  Q1      OFF    ON    OFF    ON    OFF

(e)  Tr1     OFF   ON    OFF   ON    OFF

13

# FIG. 4

# FIG. 5

# FIG. 6

EP 2 034 597 A1

FIG. 7

EP 2 034 597 A1

FIG. 8

EP 2 034 597 A1

FIG. 9

# FIG. 10

| INTERNATIONAL SEARCH REPORT | International application No. |
|---|---|
| | PCT/JP2007/058776 |

A. CLASSIFICATION OF SUBJECT MATTER
*H02M3/28*(2006.01)i, *H05B6/04*(2006.01)i

According to International Patent Classification (IPC) or to both national classification and IPC

B. FIELDS SEARCHED

Minimum documentation searched (classification system followed by classification symbols)
H02M3/28, H05B6/04

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-69767 A  (Matsushita Electric Works, Ltd.),<br>03 March, 2000 (03.03.00),<br>Par. No. [0006]; Fig. 9<br>(Family: none) | 1-6 |
| Y | JP 8-80042 A  (Matsushita Electric Works, Ltd.),<br>22 March, 1996 (22.03.96),<br>Par. Nos. [0108] to [0110]; Fig. 3<br>& US 5706183 A          & EP 0690555 A2<br>& DE 69502665 T          & HK 1009361 A1 | 1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 June, 2007 (22.06.07) | 17 July, 2007 (17.07.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/058776

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-169469 A  (Sanken Electric Co., Ltd.), 13 June, 2003 (13.06.03), Par. Nos. [0026], [0027]; Figs. 1 to 3 & WO 2003/050936 A1      & US 2004/0218405 A1 & CN 1599971 A | 1-6 |

Form PCT/ISA/210 (continuation of second sheet) (April 2005)

**REFERENCES CITED IN THE DESCRIPTION**

**Patent documents cited in the description**

- JP H670461 B